# EUROPEAN PATENT APPLICATION

(11) **EP 4 187 299 A1**
(43) Date of publication of application: **31.05.2023**
(21) Application number: 22209543.2
(22) Date of filing: 25.11.2022
(51) Int. Cl.: G02B 6/44

(54) **OPTICAL FIBRE RIBBON WITH OPTIMIZED NUMBER OF BONDS**

(30) Priority: 29.11.2021 IN 202111055206
(71) Applicant: Sterlite Technologies Limited, 122002 Gurugram, Haryana (IN)
(72) Inventor: Mishra, Atul, 122002 Gurugram (IN); Singh Panwar, Sourabh, 122002 Gurugram (IN)
(74) Representative: Petraz, Gilberto Luigi

(57) **Abstract**

The present disclosure relates an optical fibre ribbon (100) with intermittent bonding having optical fibre ribbon (100) with a plurality of optical fibres (102). Particularly, the plurality of optical fibres (102) is placed parallel and/or adjacent to each other. Moreover, the plurality of optical fibres (102) is bonded intermittently along a length. Further, the optical fibre ribbon (102) has a bond ratio of about 15 to 22.

## Description

### TECHNICAL FIELD

Embodiments of the present disclosure relate to the field of optical fibers, and more particularly, relate to an optical fiber ribbon with an optimized number of bonds for optimized mechanical strength and rollability.

This application claims the benefit of Indian Application No. 202111055206 titled "Optical Fibre Ribbon With Optimized Number Of Bonds" filed by the applicant on 29/11/2021, which is incorporated herein by reference in its entirety.

### BACKGROUND ART

With the advancement of science and technology, various modern technologies are being employed for communication purposes. One of the current trends in telecommunications is the use of optical fibers in place of the more conventional transmission media. The advantages of using optical transmission systems for communications are well recognized. Optical waveguides comprising dielectric fibers having a substantially transparent core coaxially surrounded by a cladding material of lower dielectric index may be used to guide and transmit optical signals over long distances in optical communications systems. Another advantage of optical fibers is their larger available bandwidth handling ability that provides the capability to convey larger quantities of information for a substantial number of subscribers via a media of considerably smaller size. Further, because light waves are shorter than microwaves, for example, a considerable reduction in component size is possible. As a result, a reduction in material, manufacturing, and packaging costs is achieved.

One such type of optical fiber cable is optical fiber ribbon cables. An optical fiber ribbon includes a body formed from a material that holds the optical fibers together and/or that provides a structure that assists in the handling and connecting of the optical fibers of the ribbon to various components or devices.

Optical fibers may be joined together to form a planar (planar) ribbon, which itself may be divided into subunits (e.g., a twelve-core ribbon (a twelve-fibre ribbon) that may be split into 6 optical fiber subunits). A plurality of fiber optic ribbons may be grouped to form ribbon stacks (ribbon stacks) having various sizes and shapes, such as rectangular ribbon stacks or trapezoidal ribbon stacks in which the uppermost fiber optic ribbon and/or the lowermost fiber optic ribbon has fewer optical fibers than those fiber optic ribbons toward the center of the stack. The ribbon stack configuration helps to increase the density of optical elements (e.g., ribbon fibers) within the circular buffer tube and/or the circular fiber optic cable.

Intermittently Bonded Ribbon (IBR) is an example of a rollable optical fiber ribbon that reduces the diameter of the high fibre density cable. Conventionally, the Intermittently Bonded Ribbon includes a plurality of optical fibers placed in parallel and further adjacent optical fibers are bonded intermittently along a length of the optical fibers by a plurality of connecting portions. Particularly these ribbons are rolled and then bundled to be placed inside a core for making high fiber count cables. Furthermore, the dimensions of the plurality of connecting portions are in the range of a few millimeters.

In order to withstand handling and manufacturing operations, the Intermittently Bonded Ribbons (IBR) must be mechanically strong enough. Moreover, the ribbon must be flexible enough so that it can be easily rolled for packing a large number of ribbons inside the core. However, to meet the above-stated requirements, the number of the plurality of connecting portions plays an important role. Currently, there are a few technologies to optimize the number of the plurality of connecting portions with respect to the total length of the ribbon to obtain IBRs with good mechanical strength and rollability.

Japanese patent application no. JP5789630B2 titled "Optical unit and optical fiber cable" discloses an optical unit and an optical fiber cable in which the rigidity of the optical unit in the longitudinal direction of the cable can be made uniform to reduce the loss of transmission loss and to prevent the buckling of the film. In particular, Three or more optical fibers are arranged in parallel and two adjacent optical fibers are connected by a connecting portion, and the connecting portion is arranged in the longitudinal direction of the tape core wire. Moreover, optical fiber tape core wire having an intermittent fixing structure provided intermittently and also in the width direction of the tape core wire and the optical fiber tape core wire are housed, and both end edges are overlapped in the circumferential direction.

Japanese patent application no. JP6808686B2 titled "Manufacturing method of intermittently connected optical fiber tape and intermittently connected optical fiber tape" discloses an intermittently connected optical fiber tape including a plurality of optical fibers arranged in the width direction and a connecting portion for intermittently connecting two adjacent optical fibers. In particular, the distance between the centers of the two adjacent optical fibers is larger than the diameter of the optical fiber, and the total volume contraction amount of the connecting portion per 1 m of one optical fiber is 0.00070 mm3 / m.

European patent application no. EP3882680A2 titled "Intermittently bonded ribbon with colored bonds" discloses an intermittently bonded optical fibre ribbon that includes a plurality of optical fibres such that adjacent optical fibre of the plurality of optical fibres is bonded intermittently along the length by a plurality of bonds.

However, there are a number of drawbacks in the currently similar technologies employing a means to optimize the number of the plurality of connecting portions with respect to the total length of the ribbon. None of the prior arts stated above mention optimizing the number of bonds of the optical fiber ribbon for providing the necessary mechanical strength as well as rollability. Moreover, if the optical unit on which the optical fiber ribbon is mounted is bent to a small diameter and the rigidity of the optical unit is strong, it becomes difficult to store the extra length. Further, if the bending property and rigidity are not uniform problems such as local bending and buckling occur.

Accordingly, to overcome the disadvantages of the prior art, there is an urgent need for a technical solution that overcomes the above-stated limitations in the prior arts. The present disclosure focuses on optical fiber ribbon with providing an optical fibre ribbon with an optimized number of bonds for optimized mechanical strength and rollability.

### SUMMARY OF THE DISCLOSURE

Embodiments of the present disclosure provide an optical fibre ribbon with intermittent bonding. In particular, the optical fibre ribbon comprises a plurality of optical fibres. Moreover, the plurality of optical fibres is placed parallel to each other. Furthermore, the plurality of optical fibres adjacent to each other is bonded intermittently along a length. Further, the optical fibre ribbon has a bond ratio of about 15 to 22.

According to the first aspect, the bond ratio is a ratio of a number of a plurality of bonds per unit length of the optical fibre ribbon to a number of optical fibres in the optical fibre ribbon.

In accordance with an embodiment of the present disclosure, the plurality of optical fibres is placed in contact with adjacent optical fibres.

According to a second aspect of the present disclosure, each of the plurality of optical fibres has a diameter less than or equal to 250±10 microns.

In accordance with an embodiment of the present disclosure, the length of each of the plurality of bonded portions and un-bonded portions is greater than or equal to 5 millimeters.

According to the third aspect of the present disclosure, the number of the plurality of optical fibers in the optical fiber ribbon is one of 8, 12, 16 and 24.

In accordance with an embodiment of the present disclosure, the number of the plurality of bonded portions between at least one pair of adjacent optical fibers is between 10 and 40 in the optical fibre ribbon of length 1 meter.

According to the fourth aspect of the present disclosure, the optical fibre ribbon passes a twist test when a load of about 500±25 grams is applied on the optical fibre ribbon of length 300±10 millimeters to rotate the optical fibre ribbon at 180±10 degrees in each direction for at least 20 cycles at 10 to 20 cycles per minute.

In accordance with an embodiment of the present disclosure, the plurality of bonds are placed in a periodic manner or in a random manner along a longitudinal length of the optical fibre ribbon.

In accordance with an embodiment of the present disclosure, the plurality of bonds are placed on a single side of the optical fibre ribbon.

According to the fifth aspect of the present disclosure, he plurality of bonds are placed on both sides of the optical fibre ribbon.

In accordance with an embodiment of the present disclosure, the plurality of bonds has one of concave shape, convex shape, or flat shape.

In accordance with an embodiment of the present disclosure, the bond ratio is 15 to 18 for the optical fibre ribbon having less than 12 fibers.

In accordance with an embodiment of the present disclosure, the bond ratio is 19 to 22 for the optical fibre ribbon having equal to or more than 12 fibers.

In accordance with an embodiment of the present disclosure, the optical fibre cable comprises a core, a sheath layer, a plurality of bundles, a plurality of water-swellable yarns, a plurality of embedded strength members, and one or more ripcords.

In accordance with an embodiment of the present disclosure, the core comprises the plurality of bundles with a plurality of optical fibre ribbons.

In accordance with an embodiment of the present disclosure, the plurality of optical fibres in the core is 432.

In accordance with an embodiment of the present disclosure, the plurality of optical fibres in the core is 6912.

The foregoing solutions of the present disclosure are attained by employing an optical fiber ribbon with an optimized number of bonds.

### BRIEF DESCRIPTION OF DRAWINGS

To describe the technical solutions in the embodiments of the present disclosure or in the prior art more clearly, the following briefly describes the accompanying drawings required for describing the embodiments of the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial illustration of an optical fibre ribbon in accordance with one embodiment of the present disclosure;
Fig. 2 is a pictorial illustration of the optical fibre ribbon, in accordance with another embodiment of the present disclosure; and
Fig. 3 is a pictorial illustration of an exemplary optical fibre cable, in accordance with yet another embodiment of the present disclosure.

### REFERENCE LIST

Optical fibre ribbon - 100
Plurality of optical fibres - 102
Plurality of bonded portions - 104
Plurality of bonds - 106
Plurality of un-bonded portions - 108
Optical fibre cable - 200
Core - 202
Sheath layer - 204
Plurality of bundles - 206
Plurality of water-swellable yarns - 208
Plurality of embedded strength members - 210
One or more ripcords - 212

The optical fiber ribbon for optical cables is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**
Optical fibre ribbon includes a number of optical fibres secured or embedded substantially parallel to one another with a matrix material. Also, optical fibre ribbons are enclosed inside optical fibre cables that require high fibre counts within less installation space.

Pitch is the distance between the centres of two adjacent optical fibres.

Water blocking tape is applied to prevent penetration of water and moisture inside the optical fibre cable

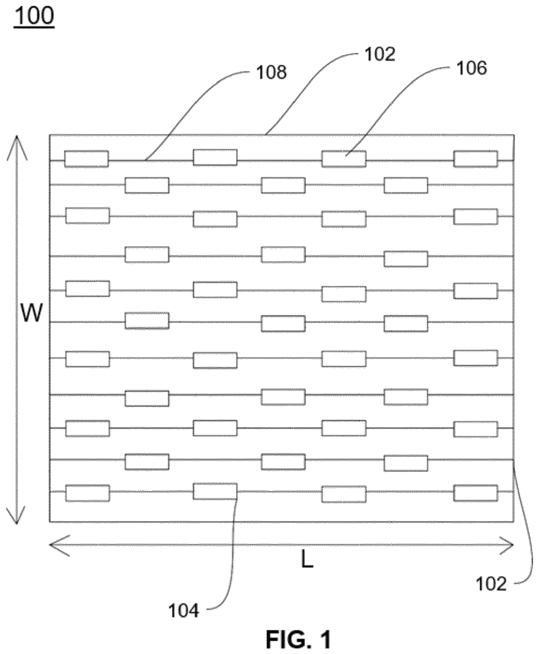

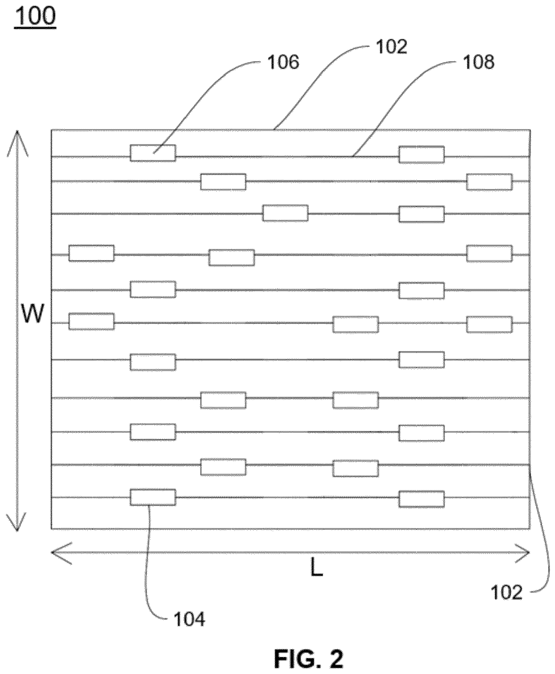

Fig. 1 and Fig. 2 are pictorial illustrations of the optical fibre ribbon in accordance with one or more embodiments of the present disclosure. In particular, the optical fibre ribbon 100 have intermittent bonding (as shown in Fig.2). The optical fibre ribbon 100 is mechanically robust and is capable to withstand handling and manufacturing operations due to its high mechanical strength. Further, the optical fibre ribbon 100 is flexible allowing the optical fibre ribbon 100 to roll easily.

In accordance with an embodiment of the present disclosure, the optical fibre ribbon 100 includes a plurality of optical fibres 102 and a plurality of bonded portions 104. In particular, the plurality of optical fibres 102 is placed parallel to each other. The number of the plurality of optical fibres 102 in the optical fibre ribbon is 12 (as shown in Fig. 1). Alternatively, the number of the plurality of optical fibres 102 in the optical fibre ribbon 100 is 8 or 16 or 24. In alternate embodiments, the number of the plurality of optical fibres 102 in the optical fibre ribbon 100 may vary.

In accordance with an embodiment of the present disclosure, each of the plurality of optical fibres 102 in the optical fibre ribbon 100 has a diameter of less than or equal to 250±10 microns. Alternatively, each of the plurality of optical fibres 102 in the optical fibre ribbon 100 may have a diameter of about 200 microns or about 185 microns or about 160 microns. Moreover, each of the plurality of optical fibres 102 in the optical fibre ribbon 100 may have the diameter of any suitable range. Further, the plurality of optical fibres 102 is placed such that adjacent optical fibres of the plurality of optical fibres 102 are bonded at least intermittently along a length L of the optical fibre ribbon 100. Subsequently, the plurality of optical fibres 102 is bonded intermittently by a plurality of bonds 106 in the plurality of bonded portions 104. Additionally, the plurality of optical fibers 102 is placed in contact with adjacent optical fibers.

In accordance with an embodiment of the present disclosure, the length of each of the plurality of bonded portions 104 and un-bonded portions 108 is greater than or equal to 5 millimeters. The number of the plurality of bonded portions 104 between at least one pair of adjacent optical fibers is between 10 and 40 in the optical fibre ribbon 100 of length 1 meter.

In accordance with an embodiment of the present disclosure, the optical fibre ribbon 100 passes a twist test when a load of about 500 ± 25 grams is applied on the optical fibre ribbon 100 of length 300 ± 10 millimeters to rotate the optical fibre ribbon 100 at 180 ± 10 degrees in each direction for at least 20 cycles at 10 to 20 cycles per minute.

In accordance with an embodiment of the present disclosure, the plurality of bonds 106 are placed in a periodic manner or in a random manner along a longitudinal length of the optical fibre ribbon 100. In one aspect of the disclosure, the plurality of bonds 106 is placed on a single side of the optical fibre ribbon 100. Alternatively, the plurality of bonds 106 are placed on both sides of the optical fibre ribbon 100.

In accordance with an embodiment of the present disclosure, each of the plurality of bonded portions 104 is followed by an un-bonded portion. Particularly, each of the plurality of bonds 106 has a convex shape, concave shape, flat shape or any suitable shape of the like. Moreover, the shape of the plurality of bonds 106 depends upon the properties of matrix material and curing conditions. Further, the matrix material is used to hold the plurality of optical fibres 102 together in the optical fibre ribbon 100.

In accordance with an embodiment of the present disclosure, the plurality of bonds 106 may be arranged in any pattern in the rollable optical fibre ribbon 100. The distance between two bonds of the plurality of bonds 106 may be same or different. The plurality of bonds 106 are placed on a single side of the optical fibre ribbon 100 or on both sides of the optical fibre ribbon 100.

In accordance with an embodiment of the present disclosure, the optical fibre ribbon 100 has a bond ratio of about 15 to 22. In particular, the bond ratio is a ratio of a number of the plurality of bonds 106 per unit length of the optical fibre ribbon 100 to a number of the plurality of optical fibres 102 in the optical fibre ribbon 100.

In accordance with an embodiment of the present disclosure, the bond ratio is 17 and 20 for 8 fiber ribbon and 24 fiber ribbon respectively. Alternatively, the bond ratio is 15 to 18 for the optical fibre ribbon 100 having less than 12 fibers. Further, the bond ratio is 19 to 22 for the optical fibre ribbon having equal to or more than 12 fibers.

In one exemplary example, the optical fibre ribbon 100 with 8 fibres has 140 bonds in 1m length L of the optical fibre ribbon 100. Then the bond ratio corresponding to 140 bonds is 17 (bond ratio = 140/8 = 17).

In another exemplary example, the optical fibre ribbon 100 having 24 optical fibres has 490 bonds in 1m length L of the optical fibre ribbon 100. Then the bond ratio corresponding to 490 bonds is 20 (bond ratio = 490/24 = 20).

The optical fibre ribbon 100 has a width W. Particularly, the width W is in range of about 1.3 millimeters to 6 millimeters. Moreover, the width W of the optical fibre ribbon 100 may vary depending upon diameter of the optical fibre and number of the plurality of optical fibres 102 in the optical fibre ribbon 100. Further, the number of the plurality of bonds 106 in a unit length (1 meter) of the optical fibre ribbon 100 is about 236 bonds for the optical fibre ribbon 100 having pitch in the range of about 160 - 250 µm. The number of the plurality of bonds 106 is optimized with respect to length L of the optical fibre ribbon 100 to obtain good mechanical strength and rollability. Each of the plurality of bonds 106 has a length of at least 5 millimeters.

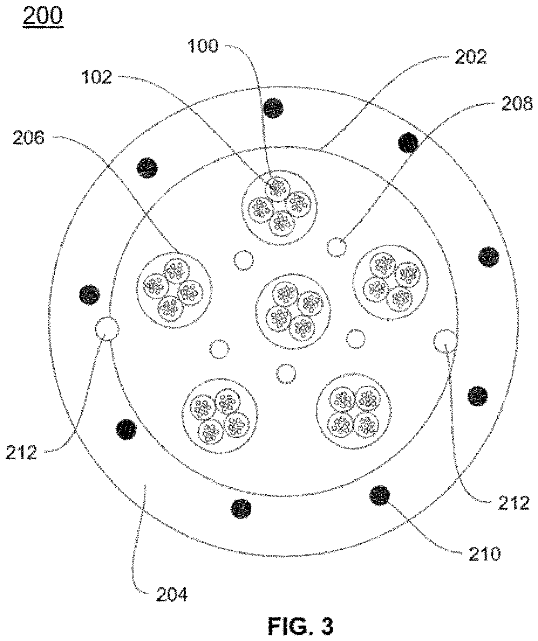

Fig. 3 is a pictorial illustration of an exemplary optical fibre cable, in accordance with yet another embodiment of the present disclosure. The optical fibre cable 200 is a high fibre count cable. In particular, the optical fibre cable 200 includes a core 202, a sheath layer 204, a plurality of bundles 206, a plurality of water-swellable yarns 208, a plurality of embedded strength members 210, and one or more ripcords 212. Moreover, the sheath layer 204 is an outermost layer of the optical fibre cable 200 surrounding the core 202. Further, the sheath layer 204 provides protection to the optical fibre cable 200 from environmental conditions such as but may not be limited to rainfall, snowfall, wind, and sunlight.

Particularly, the core 202 of the optical fibre cable 200 is coated with water blocking tape. Moreover, core 202 includes a plurality of bundles 206 having a plurality of optical fibre ribbons. Each of the plurality of optical fibre ribbons corresponds to the optical fibre ribbon 100 of Fig. 1 or Fig. 2. Further, the plurality of optical fibre ribbons is rolled and bundled together to place inside the core 202 of the optical fibre cable 200.

In accordance with an embodiment of the present disclosure, the number of bonds of the plurality of bonded portions 104 of the optical fibre ribbon 100 is optimized to obtain strong mechanical strength and flexibility. Moreover, the plurality of water-swellable yarns 208 is placed inside the core 202 of the optical fibre cable 200.

In an exemplary example, the optical fibre ribbon 100 is optimized to have 5 water-swellable yarns 208.

In an exemplary example(as shown in Fig. 3), the number of the plurality of optical fibres 102 in the core 202 of the optical fibre cable 200 is 432. Alternatively, the number of the plurality of optical fibres 102 in the core 202 of the optical fibre cable 200 maybe 6912. The number of the plurality of optical fibres 102 in the core 202 of the optical fibre cable 200 may vary.

In accordance with an embodiment of the present disclosure, the plurality of embedded strength members 210 are embedded in the sheath of the optical fibre cable 200. The number of the plurality of embedded strength members 210 is at least 2. Alternatively, the number of the strength members 210 may vary.

The present disclosure offers several advantages over the prior arts. The present disclosure provides an optical fibre ribbon with the optimized number of bonds having a high packing density. Moreover, the plurality of rollable optical fibre ribbons is mechanically robust enough to withstand handling and manufacturing operations. Further, each of the plurality of optical fibre ribbons is flexible and may be rolled easily for packing a large number of the plurality of optical fibre ribbons in the core of the optical fibre cable.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above-described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fibre ribbon (100) with intermittent bonding, **characterized in that**:
a plurality of optical fibres (102), wherein the plurality of optical fibres (102) are placed parallel to each other,
wherein the plurality of optical fibres (102) adjacent to each other are bonded intermittently along a length, wherein the optical fibre ribbon (100) has a bond ratio of about 15 to 22.

2. The optical fibre ribbon (100) as claimed in claim 1, wherein the bond ratio is a ratio of a plurality of bonds (106) per unit length of an optical fibre ribbon (104) to a number of optical fibres in the optical fibre ribbon (100)

3. The optical fibre ribbon (100) as claimed in claim 1, wherein the plurality of optical fibres (102) is placed in contact with adjacent optical fibres

4. The optical fibre ribbon (100) as claimed in claim 1, wherein each of the plurality of optical fibres (102) has a diameter less than or equal to 250±10 microns.

5. The optical fibre ribbon (100) as claimed in claim 1, wherein length of each of the plurality of bonded portions (104) and un-bonded portions (108) is greater than or equal to 5 millimeters.

6. The optical fibre ribbon (100) as claimed in claim 1, wherein number of the plurality of optical fibers (102) in the optical fiber ribbon (100) is one of 8, 12, 16 and 24.

7. The optical fibre ribbon (100) as claimed in claim 1, wherein number of the plurality of bonded portions (104) between at least one pair of adjacent optical fibers is between 10 and 40 in the optical fibre ribbon (100) of length 1 meter.

8. The optical fibre ribbon (100) as claimed in claim 1, wherein the optical fibre ribbon (100) passes a twist test when a load of about 500±25 grams is applied on the optical fibre ribbon (100) of length 300±10 millimeters to rotate the optical fibre ribbon (100) at 180±10 degrees in each direction for at least 20 cycles at 10 to 20 cycles per minute.

9. The optical fibre ribbon (100) as claimed in claim 1, wherein the plurality of bonds (106) are placed in a periodic manner or in a random manner along a longitudinal length of the optical fibre ribbon (100).

10. The optical fibre ribbon (100) as claimed in claim 1, wherein the plurality of bonds (106) are placed on a single side of the optical fibre ribbon (100).

11. The optical fibre ribbon (100) as claimed in claim 1, wherein the plurality of bonds (106) are placed on both sides of the optical fibre ribbon (100).

12. The optical fibre ribbon (100) as claimed in claim 1, wherein the plurality of bonds (106) have one of concave shape, convex shape, or flat shape

13. The optical fibre ribbon (100) as claimed in claim 1, wherein the bond ratio is 15 to 18 for the optical fibre ribbon (100) having less than 12 fibers.

14. The optical fibre ribbon (100) as claimed in claim 1, wherein the bond ratio is 19 to 22 for the optical fibre ribbon (100) having equal to or more than 12 fibers.

15. The optical fibre ribbon (100) as claimed in claim 1, wherein the optical fibre cable 200 comprising a core (202), a sheath layer (204), a plurality of bundles (206), a plurality of water-swellable yarns (208), a plurality of embedded strength members (210), and one or more ripcords (212).
